# FASCICULE DE BREVET EUROPEEN

(11) **EP 3 355 036 B1**
(45) Date de publication et mention de la délivrance du brevet: **02.08.2023**
(21) Numéro de dépôt: 18153245.8
(22) Date de dépôt: 24.01.2018
(51) Int. Cl.: G01F 13/00, G07F 11/44

(54) **DISPOSITIF DE DISTRIBUTION DE PRODUIT ALIMENTAIRE PULVÉRULENT**
VORRICHTUNG ZUR AUSGABE EINES PULVERFÖRMIGEN NAHRUNGSMITTELPRODUKTS
DEVICE FOR DISPENSING A POWDERED FOOD PRODUCT.

(30) Priorité: 27.01.2017 FR 1750681
(43) Date de publication de la demande: 01.08.2018
(73) Titulaire: MCPM, 85290 Mortagne sur Sevre (FR); Roulet, Laurent, 49360 Yzernay (FR)
(72) Inventeur: ROULET, Laurent, 49360 YZERNAY (FR); COIRIER, Patrice, 85290 MORTAGNE SUR SEVRE (FR)
(74) Mandataire: Casalonga

(56) Documents cités:
- US-A- 4 123 213
- US-A- 5 826 754
- US-A1- 2007 181 613
- US-A1- 2011 062 187

## Description

L'invention concerne le domaine des dispositifs de distribution de produit alimentaire, en particulier des dispositifs de distribution de produit alimentaire destinés à être installés dans des commerces alimentaires.

Les produits alimentaires en vrac, notamment tels que les graines ou les farines, se vendent dans des commerces tels que les commerces alimentaires. De manière classique, un produit alimentaire en vrac est empaqueté dans un emballage. Pour acheter un tel produit, le consommateur saisit un emballage correspondant au produit alimentaire et à un volume ou une masse qu'il choisit. Le consommateur achète l'ensemble constitué de l'emballage et du produit alimentaire contenu dans l'emballage.

Bien qu'un tel mode de vente apporte satisfaction depuis de nombreuses années, de nouveaux modes de consommation viennent remettre en question l'empaquetage des produits alimentaires en vrac. En effet, l'apparition de commerces alimentaires spécialisés, le succès de l'alimentation biologique et une prise de conscience écologique incitent les consommateurs à utiliser des modes de distribution de produits alimentaires alternatifs.

En conséquence, il est connu de mettre à disposition des clients dans les commerces tels que les commerces alimentaires spécialisés ou biologiques un distributeur de produits alimentaires. Un tel distributeur a pour but de permettre aux clients de se servir eux-mêmes en produit alimentaire.

Par exemple, un distributeur connu comporte un réservoir doté d'une ouverture. Le réservoir est rempli avec le produit alimentaire destiné à être distribué, par exemple des graines. Un moyen de transport est prévu, par exemple une pelle adaptée. L'utilisateur saisit la pelle pour déplacer une quantité choisie de graines jusque dans un récipient pouvant par exemple être un sac plastique.

Bien qu'un tel dispositif soit considéré comme globalement satisfaisant pour des produits tels que des graines ou des fruits secs, il n'apporte toutefois pas pleinement satisfaction lorsque le produit à distribuer est un produit pulvérulent tel que de la farine de blé.

Selon un premier inconvénient, le stockage d'un matériau pulvérulent tel que la farine peut impliquer une solidification de la couche de farine qui complique le prélèvement avec un moyen tel qu'une pelle. Le prélèvement du produit alimentaire est rendu plus compliqué pour l'utilisateur.

Selon un deuxième inconvénient, le transport du produit alimentaire pulvérulent jusqu'au récipient génère une poussière de produit alimentaire. Cette poussière salit le dispositif de distribution et son environnement. Lorsqu'un tel dispositif est utilisé dans un magasin, cette poussière salit le magasin et dissuade le consommateur.

Un troisième inconvénient résulte du fait que le produit alimentaire prélevé provient généralement de la partie supérieure du produit alimentaire stocké dans le réservoir. En résultat, une quantité résiduelle de produit alimentaire située à proximité d'une paroi inférieure du réservoir reste présente pendant de longues durées. Afin d'éviter que des problèmes d'hygiène ou de stockage apparaissent, il est nécessaire de mélanger le produit alimentaire stocké dans le réservoir et de vidanger et nettoyer régulièrement le réservoir. Ces opérations nécessitent l'intervention d'opérateurs et occasionnent des gaspillages de produit alimentaire.

En résultat, des dispositifs du type de celui décrit ci-dessus sont très peu utilisés pour des produits alimentaires pulvérulents tels que de la farine de blé ou de l'épeautre.

US 5 826 754 divulgue un dispositif de distribution de produit alimentaire, comprenant un réservoir, un passage de versage du produit alimentaire connecté au réservoir, et un moyen de transport du produit alimentaire, ledit moyen de transport étant situé à l'intérieur du réservoir et comportant une vis sans fin.

US 2007/181613 A1 divulgue un dispositif de distribution de produit alimentaire pulvérulent, comprenant un réservoir, un passage de versage du produit alimentaire connecté au réservoir, et un moyen de transport du produit alimentaire, ledit moyen de transport comportant une vis sans fin.

Au vu de ce qui précède, l'invention a pour but de fournir un dispositif de distribution de produits alimentaires pulvérulents palliant les inconvénients précités.

Plus particulièrement, l'invention a pour but de permettre de distribuer un produit alimentaire pulvérulent de manière simple et précise, en limitant au maximum l'apparition de poussière du produit alimentaire, en limitant les opérations devant être mises en oeuvre par un opérateur et en maintenant une conception relativement simple du distributeur.

A cet effet, il est proposé un dispositif de distribution de produit alimentaire pulvérulent selon la revendication 1, ledit dispositif comprenant, entre autres, un réservoir, un passage de versage du produit alimentaire connecté au réservoir, et un moyen de transport du produit alimentaire, ledit moyen de transport étant situé à l'intérieur du réservoir.

Selon une caractéristique générale de ce dispositif de distribution, le moyen de transport comporte une vis sans fin.

Au moyen d'un tel dispositif, qui comprend notamment une vis sans fin comme moyen de transport du produit alimentaire, il est possible d'actionner le déplacement du produit alimentaire en exerçant un effort moindre qu'en utilisant un moyen de transport de l'art antérieur tel qu'une pelle. En outre, lorsque la vis sans fin est à l'arrêt, le déplacement du produit alimentaire est empêché de sorte que l'émission de poussière du produit alimentaire vers l'extérieur du dispositif est évitée. Par ailleurs, la vis sans fin permet de distribuer la quantité de produit alimentaire située dans une partie inférieure du réservoir, de sorte à renouveler la totalité du produit alimentaire stocké. La vis sans fin mélange également le produit alimentaire contenu dans le réservoir. En conséquence, il n'est plus nécessaire de faire intervenir un opérateur aussi souvent pour mettre en oeuvre des opérations de vidange, de nettoyage ou de mélangeage.

Le dispositif de distribution de l'invention comprend un moyen de recyclage d'un mélange d'air et de produit alimentaire pulvérulent en suspension.

Un tel moyen de recyclage permet d'éviter une émission de poussière du produit alimentaire pulvérulent qui pourrait se produire notamment lors d'une transition entre un état de distribution, dans lequel la vis sans fin est entraînée en rotation, et un état de non distribution, dans lequel la vis sans fin est maintenue immobile.

Selon l'invention, le réservoir est délimité par une enceinte fermée, le moyen de recyclage comprenant un tube reliant le passage de versage à l'enceinte fermée.

On peut en outre prévoir un moyen de blocage de la distribution du produit alimentaire pulvérulent et un moyen de commande apte à commander l'activation du moyen de blocage.

Grâce à un tel moyen de blocage et un tel moyen de commande, on parvient à limiter encore davantage la sortie de produit alimentaire sous forme de poussière.

Selon un mode de réalisation, le dispositif comprend en outre un plateau de support apte à supporter un récipient de versage de produit alimentaire pulvérulent et un moyen de détection capable de détecter la présence d'un récipient de versage de produit alimentaire sur le plateau de support, le moyen de commande étant configuré pour commander la désactivation du moyen de blocage seulement lorsque le moyen de détection détecte la présence d'un récipient de versage sur le plateau de support.

Grâce à cette configuration du moyen de commande, on empêche la distribution du produit alimentaire lorsqu'aucun récipient n'est disposé pour recevoir le produit. On évite ainsi que se produise une perte de produit alimentaire et une quantité importante de poussière lorsque le dispositif est actionné alors qu'il ne devrait pas l'être, par exemple s'il est actionné par un enfant qui joue avec le dispositif.

Dans un mode de réalisation, le moyen de commande comprend un levier de commande rotatif par rapport au réservoir, le plateau de support étant apte à se déplacer en translation par rapport au réservoir, selon une direction perpendiculaire à la direction de rotation du levier de commande, le moyen de blocage comprenant un pion rotatif autour de la direction de rotation du levier de commande, le pion rotatif étant apte à être disposé dans une position de blocage de la rotation du levier de commande.

Grâce à cette configuration du moyen de commande, on détecte de manière simple si un récipient est disposé pour recevoir le produit alimentaire de sorte à empêcher la distribution du produit.

Avantageusement, le réservoir comprend un orifice de passage situé sur le trajet du produit alimentaire entre le réservoir et le passage de versage, le moyen de blocage comprenant en outre un moyen d'obstruction de l'orifice de passage.

Grâce à un tel moyen d'obstruction, on empêche la petite quantité de produit alimentaire située entre deux filets de la vis sans fin de s'échapper. On limite donc encore davantage la quantité de poussière de produit alimentaire pouvant être générée par le dispositif. En outre, on évite le contact du produit alimentaire avec l'air extérieur de sorte à favoriser sa bonne conservation.

Dans un mode de réalisation, le moyen de commande comprend un levier de commande rotatif par rapport au réservoir, le moyen d'obstruction comprenant une pièce de support montée rotative par rapport au réservoir et un mécanisme de transmission de mouvement capable de transmettre un mouvement du levier de commande à la pièce de support, la pièce de support comprenant une portion formant clapet apte à obstruer l'orifice de passage.

De préférence, la vis sans fin comprend un arbre pivotant par rapport au réservoir, le moyen de blocage comprenant un moyen de verrouillage apte à verrouiller le pivotement dudit arbre par rapport au réservoir.

Grâce à un tel moyen de verrouillage, on empêche la rotation de la vis sans fin, de sorte à empêcher le produit alimentaire de sortir par un orifice de sortie du réservoir.

Dans un mode de réalisation, l'arbre pivotant comprend une excroissance radiale, le moyen de commande comprend un levier de commande rotatif par rapport au réservoir, le moyen de verrouillage comprenant une pièce de verrouillage montée rotative par rapport au réservoir et un mécanisme de transmission de mouvement apte à transmettre un mouvement du levier de commande à la pièce de verrouillage, la pièce de verrouillage comprenant un évidement de forme complémentaire à la forme de l'excroissance radiale, l'évidement étant apte à entourer l'excroissance radiale.

D'autres buts, caractéristiques et avantages de l'invention apparaîtront à la lecture de la description suivante, donnée uniquement à titre d'exemple non limitatif et faite en référence aux dessins annexés sur lesquels :
- la figure 1 est une vue en perspective d'un dispositif de distribution de produits alimentaires pulvérulents selon un exemple de réalisation de l'invention,
- la figure 2 est une vue en perspective du dispositif de la figure 1, sur laquelle une enveloppe de protection du passage de versage a été omise,
- la figure 3 est une vue en perspective en coupe du dispositif de la figure 2,
- la figure 4 est une vue de détail du dispositif de la figure 3, et
- la figure 5 est une vue en perspective selon un autre point de vue du dispositif des figures 1 à 4.

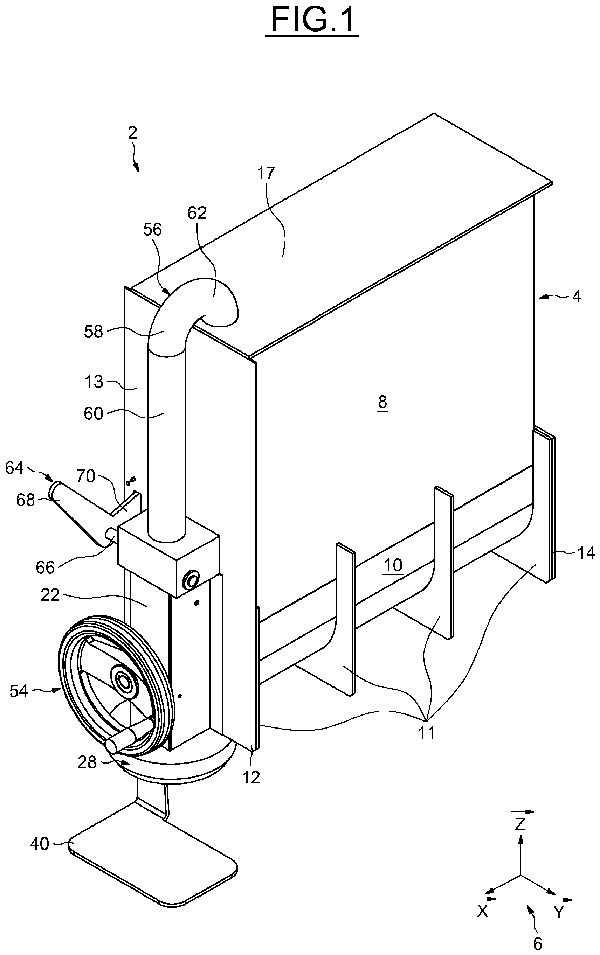

En référence aux figures 1 à 5, on a représenté en perspective un dispositif de distribution 2. Le dispositif de distribution 2 est destiné à être installé dans un commerce alimentaire pour permettre la distribution de produit alimentaire. Plus particulièrement, le dispositif 2 permet la distribution de produits alimentaires en vrac, tels que des graines, des pois, des haricots, des lentilles, des fruits secs, de l'épeautre, des farines alimentaires, de la farine de blé, de la farine de céréale, des farines animales, etc. Le dispositif 2 comporte notamment un réservoir 4, considéré dans la présente demande comme étant le bâti du dispositif 2.

Pour des raisons de clarté et de compréhension, on définit une base vectorielle orthonormale 6 attachée au réservoir 4. La base 6 est constitué d'un vecteur *x̅,* d'un vecteur *y̅* et d'un vecteur *z̅.* Lorsque le dispositif 2 est correctement disposé sur une surface horizontale, la direction du vecteur *z̅* coïncide avec la direction verticale, le vecteur *z̅* étant dirigé du bas vers le haut. Dans la présente demande, les expressions « vers le bas », « vers le haut », « inférieur » et « supérieur » seront comprises comme se référant relativement par rapport au dispositif 2 correctement disposé sur une surface horizontale, c'est-à-dire en supposant le vecteur *z̅* orienté verticalement et pointant vers le haut.

Le réservoir 4 comporte une partie parallélépipédique 8 et une partie cylindrique 10 à base semi-circulaire. La partie 8 comporte douze arêtes respectivement orientées selon la direction des vecteurs *x̅, y̅* et *z̅.* Plus particulièrement, la partie 8 comporte deux paires d'arêtes de relativement grande longueur dirigées selon la direction du vecteur *x̅,* deux paires d'arêtes de relativement moyenne longueur dirigées selon la direction du vecteur *z̅* et deux paires d'arêtes de relativement petite longueur dirigées selon la direction du vecteur *y̅.* Les douze arêtes délimitent six faces dont une face avant 13 et une face arrière 15, perpendiculaires au vecteur *x̅,* et une face supérieure 17 perpendiculaire au vecteur *z̅.* La partie 8 est située au-dessus de la partie 10.

La partie 10 est cylindrique à base semi-circulaire de diamètre égal à la longueur des arêtes de relativement petite longueur de la partie 8. La partie 10 s'étend dans le prolongement d'une face inférieure de la partie 8, dans la direction du vecteur *z̅* et en sens opposé au vecteur *z̅.* La partie 10 est axialement délimitée par des surfaces frontales 12 et 14. Les surfaces frontales 12 et 14 s'étendent respectivement dans le plan des faces 13 et 15 de la partie 8.

De manière à permettre de maintenir le dispositif 2 correctement disposé sur une surface plane, il est prévu une pluralité de pattes 11 s'étendant autour de la partie 10 et/ou d'une portion inférieure de la partie 8. Dans l'exemple illustré, quatre pattes 11 sont réparties sur la longueur du réservoir 4 selon la direction du vecteur *x̅.* Les pattes 11 ont une forme de U et s'étendent de part et d'autre de la partie 10 et d'une portion inférieure des faces de la partie 8 perpendiculaires au vecteur *y̅*. Les pattes 11 sont délimitées par une surface inférieure perpendiculaire à la direction du vecteur *z̅.*

Les faces de la partie 8, à l'exception de la face inférieure (non référencée) délimitent avec la face cylindrique (non référencée) de la partie 10 et les surfaces 12 et 14 une enceinte fermée du réservoir 4. Cette enceinte fermée est destinée à contenir le produit alimentaire.

Une ouverture de remplissage 16 est prévue afin de permettre d'alimenter l'enceinte fermée du réservoir 4 avec du produit alimentaire. L'ouverture 16 est de préférence prévue sur l'une des faces supérieure ou latérales de la partie 8, de préférence sur la face supérieure 17 ou sur l'une des faces latérales, à proximité de la face supérieure 17. Dans le mode de réalisation illustré, l'ouverture 16 est prévue sur la face arrière 15 à proximité de la face supérieure 17. De cette manière, il est possible, lorsque tout le produit alimentaire du réservoir 4 a été distribué, de remplir de nouveau le réservoir 4 avec du produit alimentaire.

L'ouverture 16 comporte un capot 18. Le capot 18 a pour fonction de fermer l'ouverture 16 lorsqu'il n'y a pas besoin d'insérer du produit alimentaire dans le réservoir 4. Le capot 18 est réalisé en un matériau approprié et peut comprendre un joint d'étanchéité approprié pour fournir une étanchéité à l'air de l'intérieur du réservoir 4 lorsque le capot 18 est fermé. Il en résulte notamment une meilleure conservation du produit alimentaire présent dans le réservoir 4.

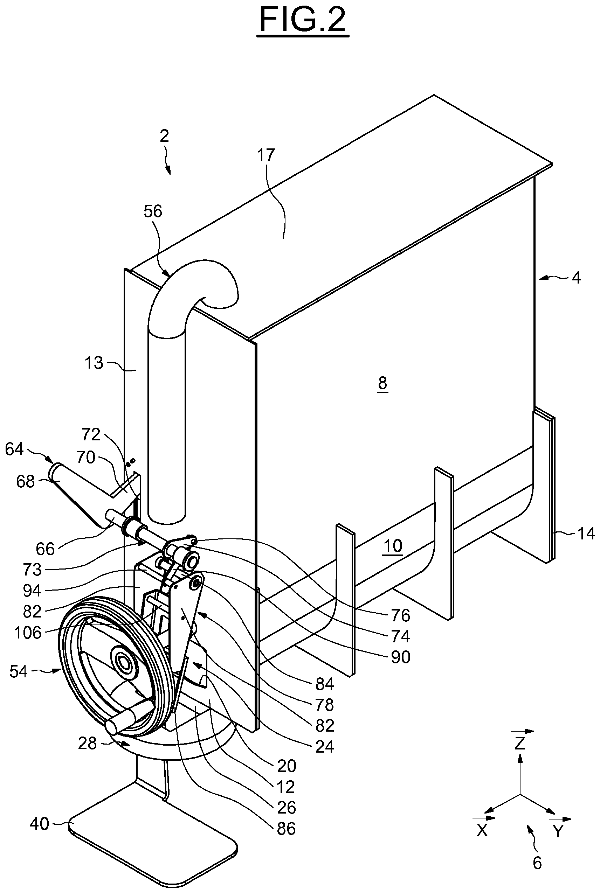

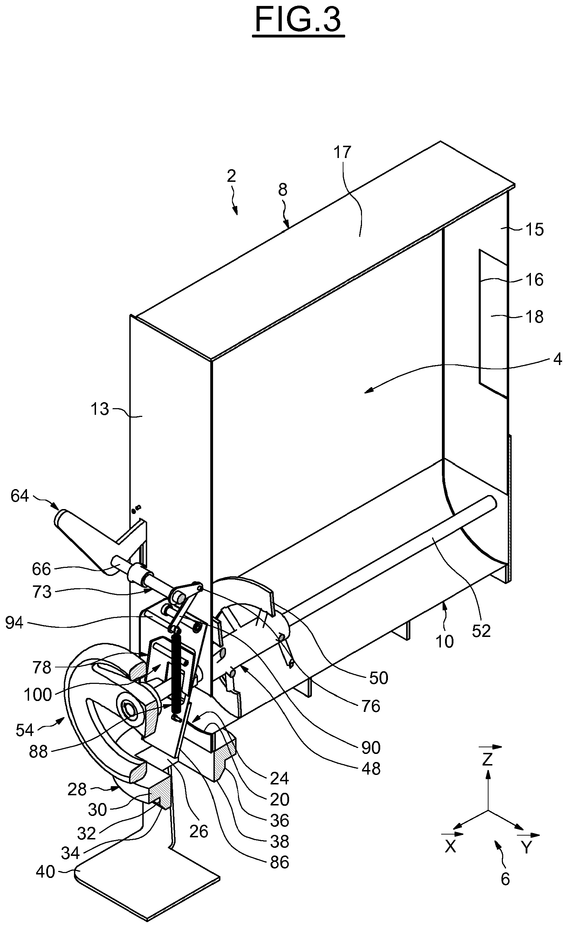

Comme cela est visible sur les figures 2 et 3, il est prévu un orifice de versage 20 sur la surface 12. L'orifice 20 a pour fonction de permettre la sortie du produit alimentaire hors du réservoir 4 en vue de sa distribution lorsque le dispositif 2 est actionné par un utilisateur. Comme illustré sur les figures 2 et 3, l'orifice 20 est préférentiellement disposé sur une portion inférieure du réservoir 4, en l'espèce sur une extrémité inférieure de la partie cylindrique 10. Il en résulte la possibilité de distribuer du produit alimentaire même si le réservoir 4 n'est pas plein ou est presque vide.

En référence maintenant à la figure 1, le dispositif 2 comporte une enveloppe 22 montée sur la surface 12 et sur une partie inférieure de la face 13. L'enveloppe 22 est solidaire du réservoir 4. En conséquence, l'enveloppe 22 se situe dans le prolongement, par rapport à la direction et au sens du vecteur *x̅,* de l'orifice 20.

L'enveloppe 22 délimite un passage de versage 24. Le passage de versage 24 est visible sur les figures 2 et 3, sur lesquelles l'enveloppe 22 a volontairement été omise. Comme cela est visible sur les figures 2 et 3, le passage 24 s'étend depuis l'orifice 20 jusqu'à un trou débouchant 26 à base carrée.

Le dispositif 2 comporte une buse de versage 28 notamment visible sur la figure 3. La buse 28 est destinée à être plaquée contre une partie supérieure d'un récipient de versage (non représenté) destiné à recevoir le produit alimentaire distribué. La buse 28 comporte une première portion cylindrique 30 à base circulaire et d'axe de cylindricité parallèle à la direction du vecteur *z̅.* Une seconde portion cylindrique 32 coaxiale à la portion 30 s'étend depuis une surface inférieure de la portion 30 selon la direction du vecteur *z̅* et en sens opposé au vecteur *z̅.* La portion 32 est à base circulaire et de plus petit diamètre que la base circulaire de la portion 30. La buse 28 comporte aussi une portion tronconique 34 coaxiale par rapport aux portions 30 et 32. La portion 34 s'étend depuis une surface inférieure de la portion 32 selon la direction du vecteur *z̅* et en sens opposé au vecteur *z̅.* Plus particulièrement, la portion 34 s'étend selon la direction du vecteur *z̅* entre une extrémité supérieure 36 et une extrémité inférieure 38. L'extrémité 36 est circulaire de diamètre égal au diamètre de la base circulaire de la portion cylindrique 32. L'extrémité 38 est circulaire de diamètre strictement inférieur au diamètre de l'extrémité 36.

Au moyen de la buse de versage 28 ainsi conçue, il est possible de plaquer de manière étanche par rapport à la poussière différents types de récipient. En particulier, un récipient qui est doté d'une partie supérieure cylindrique à base circulaire, dont le diamètre est compris entre le diamètre de l'extrémité inférieure 38 et le diamètre de la base circulaire de la portion cylindrique 30, peut être utilisé. Un tel récipient de versage est particulièrement adapté pour être plaqué contre la buse 28 de sorte à être connecté fluidiquement avec le passage 22, tout en mettant en oeuvre une étanchéité par rapport à la poussière de produit alimentaire avec l'extérieur du dispositif 2. Comme cela est visible sur la figure 3, le trou débouchant 26 s'étend selon la direction du vecteur *z̅* sur toute la longueur de la buse 28.

En référence aux figures 1 à 3 et 5, le dispositif 2 comporte un plateau de support 40. Le plateau 40 a une forme plane perpendiculaire à la direction du vecteur *z̅.* Le plateau 40 est situé en regard de la buse 28 par rapport à la direction du vecteur *z̅.* Le plateau 40 est situé en dessous de la buse 28. Le plateau 40 est destiné à supporter un récipient de versage mis en place par un utilisateur pour prélever du produit alimentaire du dispositif 2. Plus particulièrement, le plateau 40 supporte le récipient de versage par contact avec la surface inférieure du récipient de versage, une partie supérieure du récipient de versage étant en contact contre la buse 28.

Le plateau 40 est mobile par rapport au réservoir 4 en translation selon la direction du vecteur *z̅.* Le plateau 40 comprend une languette 42 s'étendant depuis le plateau 40 selon la direction du vecteur *z̅* et vers le haut. La liaison mécanique de glissière entre le plateau 40 et le réservoir 4 est assurée par un moyen de guidage en translation 44 disposé entre une patte 11 et la languette 42. En outre, un moyen de rappel élastique, en l'espèce un ressort de traction 46, est prévu de manière à rappeler la languette 42 vers le haut selon la direction du vecteur *z̅.* Le ressort 46 et la languette 42 sont ainsi conçus que, lorsqu'un récipient adapté est disposé entre la buse 28 et le plateau 40, la languette 42 est décalée vers le bas par rapport à sa position de repos, c'est-à-dire par rapport à sa position lorsqu'aucun récipient de perçage n'est disposé.

En référence à la figure 3, le dispositif 2 comporte un moyen de transport 48 du produit alimentaire. Le moyen 48 comprend une vis sans fin 50 s'étendant autour d'un arbre 52. La vis sans fin 50 et l'arbre 52 s'étendent selon une direction parallèle à la direction du vecteur *x̅.* Plus particulièrement, la vis sans fin 50 et l'arbre 52 sont montés rotatifs autour de la direction du vecteur *x̅* par rapport au réservoir 4. La vis sans fin 50 et une partie de l'arbre 52 sont situés à l'intérieur du réservoir 4, de préférence dans une partie inférieure du réservoir 4. Dans l'exemple illustré, la vis sans fin 50 est disposée dans la partie 10 et dans une portion inférieure de la partie 8. L'arbre 52 traverse la surface 12 et s'étend selon la direction du vecteur *x̅* vers l'extérieur du dispositif 2. À son extrémité située à l'extérieur du dispositif 2, l'arbre 52 comporte un volant d'actionnement 54 permettant d'actionner la rotation autour de la direction du vecteur *x̅* de l'arbre 52 et de la vis sans fin 50.

En référence maintenant aux figures 1 à 3, le dispositif 2 comporte un moyen de recyclage 56. Le moyen 56 a pour fonction de récupérer un mélange d'air et de produit alimentaire flottant à proximité du passage 24 et de réinjecter ce mélange dans le réservoir 4. De la sorte, on évite que de la poussière de produit alimentaire s'échappe juste après une distribution de produit alimentaire, au moment ou un utilisateur enlève un récipient.

Comme cela est visible sur la figure 1, le moyen 56 comporte un tube 58 comprenant une portion droite 60 et une portion coudée 62. La portion droite 60 a une forme cylindrique à base circulaire dirigée selon la direction du vecteur *z̅.* La portion droite 60 s'étend vers le haut depuis une surface supérieure de l'enveloppe 20. En résultat, la section droite 60 est en communication fluidique avec le passage 24. La portion droite 60 est axialement délimitée, par rapport à la direction du vecteur *z̅,* par le plan de la face 17 de la partie 8. La portion coudée 62 raccorde fluidiquement l'extrémité supérieure de la portion 60 à un orifice (non représenté) pratiqué dans la face supérieure 17.

Grâce au fait que le réservoir 4 délimite une enceinte fermée, la sortie de produit alimentaire par l'orifice 20 entraîne l'apparition d'une dépression à l'intérieur du réservoir 4. En résultat, de l'air situé dans le passage 24 est aspiré par le tube 58. On recueille ainsi la plupart des poussières de produit alimentaire en suspension dans le passage 24, évitant ainsi que ces poussières se répandent à l'extérieur du dispositif 2 lorsque l'utilisateur retire le récipient après une distribution de produit alimentaire.

Le dispositif 2 est en outre doté de moyens de blocage de la distribution de produit alimentaire. En l'espèce, deux moyens de blocage distincts permettent de bloquer, de deux manières différentes, la distribution de produits alimentaires lorsque celle-ci n'est pas souhaitée. En résultat, on élimine le plus possible les pertes de produit alimentaire et l'apparition de poussière de produit alimentaire autour du dispositif 2.

Dans l'exemple illustré, le dispositif 2 comportent un levier de commande 64. Le levier de commande 64 a pour fonction de commander les moyens de blocage. Comme illustré sur les figures 1 à 3, le levier 64 comporte une tige 66 en liaison pivot autour de la direction du vecteur *y̅* par rapport à l'enveloppe 22. Le levier 64 comporte une portion formant poignée 68. La portion 68 est destinée à être manipulée par l'utilisateur pour lui permettre de commander la distribution de produit alimentaire. La portion 68 est de forme sensiblement plane perpendiculaire à la direction du vecteur *y̅.* Le levier 64 comporte une languette de butée 70 qui s'étend dans le même plan que la portion 68. La languette 70 traverse la face 13 de la partie 8. Plus particulièrement, il est prévu une fente 72 traversant la face 13 à travers laquelle s'étend la languette 70.

Le dispositif 2 comprend une pièce de support 78 servant à supporter les moyens de blocage de la distribution de produit alimentaire. La pièce 78 est située à l'intérieur de l'enveloppe 22. La pièce de support 78 est constituée d'une plaque principale 80 délimitée par deux plaques périphériques 82. Les plaques 82 sont perpendiculaires à la direction du vecteur *y̅.* Les plaques 82 sont toutes deux perpendiculaires à la plaque 80.

Comme cela est visible sur les figures 2 et 3, la pièce 78 est connectée mécaniquement au réservoir 4 par une liaison pivot d'axe parallèle au vecteur *y̅.* À cet effet, les plaques 82 comportent un alésage dans lequel est inséré un axe 84 solidaire de l'enveloppe 22.

En référence maintenant à la figure 3, la plaque 80 comporte une portion formant clapet 86. La portion 86 est située sur une partie inférieure de la plaque 80. La pièce 78, l'axe 84 et la portion 86 sont conçues de telle sorte que, lorsque la pièce principale 78 est pivotée autour de l'axe 84 pour se trouver en butée contre la face 13 et la surface 12, la portion 86 est positionnée en regard de l'orifice 20. Lorsque la pièce 78 est ainsi positionnée, la plaque 80 est sensiblement perpendiculaire au vecteur *x̅.* De préférence, la portion 86 est réalisée en un matériau flexible de sorte à former un tampon étanche permettant d'obstruer de manière efficace l'orifice 20.

En référence à la figure 3, la pièce de support 78 comporte un moyen de rappel élastique 88 permettant de rappeler la pièce 78 dans sa position dans laquelle la portion 86 obstrue l'orifice 20. Dans l'exemple illustré, le moyen de rappel élastique est un ressort de traction. Toutefois, il est bien entendu possible sans sortir du cadre de l'invention d'envisager tout autre moyen de rappel élastique, par exemple un ressort à lame, un ressort de torsion, etc.

En référence à la figure 3, la plaque principale 80 comporte un jour 96 ayant pour fonction de permettre le passage de l'arbre 52 à travers la pièce 78. Par ailleurs, l'arbre 52 de la vis sans fin 50 comporte une excroissance radiale 98. De préférence, l'excroissance 98 a une forme particulière, par exemple une forme polygonale. Dans l'exemple illustré, la forme de l'excroissance 98 est octogonale. Le jour 96 est de dimensions assez larges pour permettre également le passage de l'excroissance 98.

La pièce 78 comporte en outre une pièce de verrouillage 100 de la rotation de l'arbre 52. La pièce 100 comprend une plaque principale 102 délimitée par deux plaques périphériques 104. Les plaques 104 sont situées à l'intérieur des plaques 82 et orientées selon des plans parallèles aux plans des plaques 82. La pièce 78 comporte un axe 106 traversant deux alésages (non représentés) pratiqués respectivement dans les deux plaques 104. De cette manière, la pièce 100 est en liaison pivot par rapport à la pièce 78 autour de l'axe 106 dirigé par le vecteur *y̅.*

La pièce 100 comporte en outre un évidement 108 de forme complémentaire à la forme de l'excroissance 98. En l'espèce, l'évidement 108 a une forme rectangulaire de sorte à pouvoir coopérer par complémentarité de forme avec l'excroissance octogonale 98. En d'autres termes, lorsque la pièce 100 est disposée autour de l'excroissance 98, la coopération par complémentarité de formes entre l'excroissance 98 et l'évidement 108 bloque en rotation l'arbre 52.

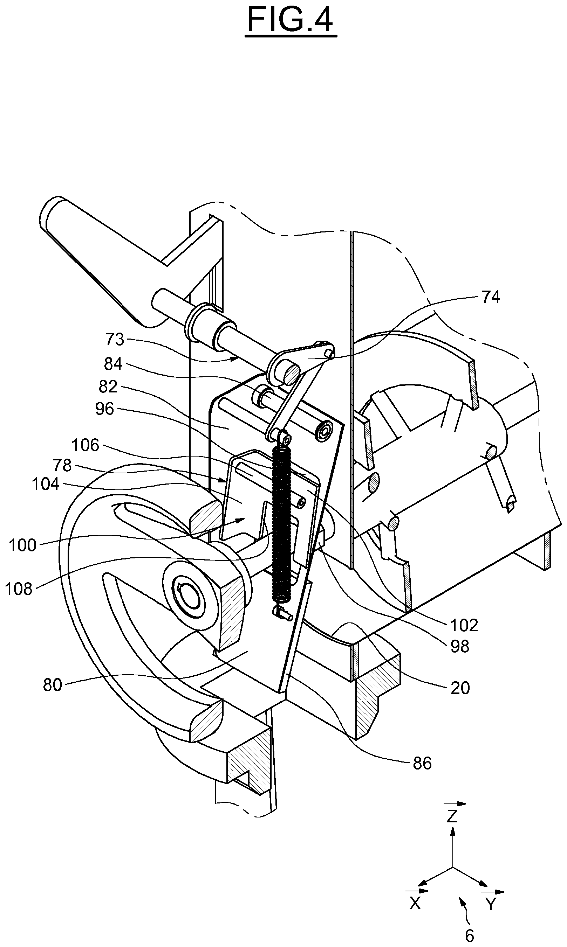

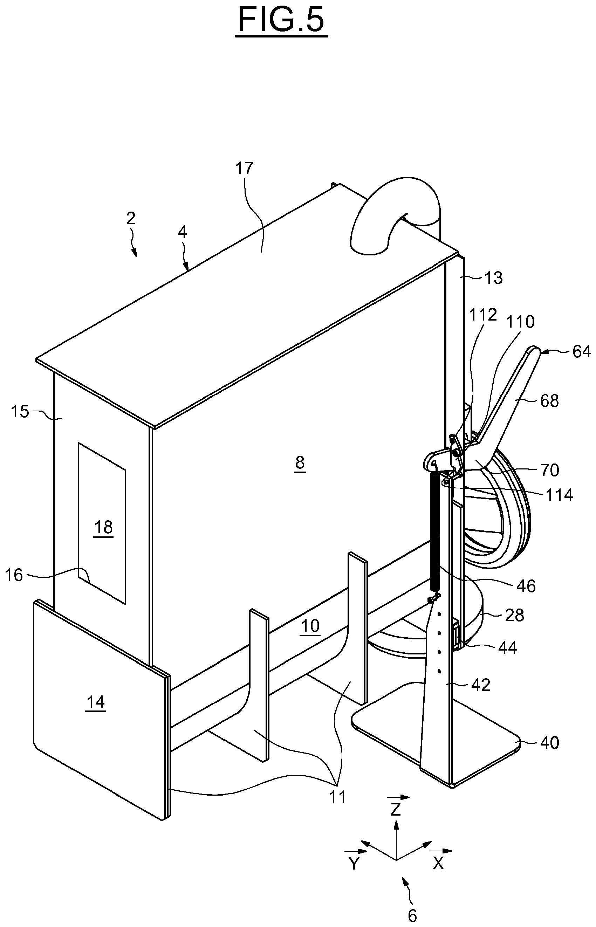

En référence aux figures 2 à 4, le dispositif 2 comporte un mécanisme de transmission de mouvement 73. Le mécanisme 73 est principalement situé à l'intérieur de l'enveloppe 22, de sorte qu'il est caché sur les figures 1 et 5. Le mécanisme de transmission de mouvement 73 a pour fonction de transmettre un mouvement du levier de commande 64 aux moyens de blocage de la distribution de produit alimentaire. Le mécanisme 73 va maintenant être décrit en référence à la figure 4.

Le mécanisme 73 comporte une languette de transmission 74 qui s'étend radialement vers l'extérieur depuis la tige 66 du levier 64. La languette 74 est de forme plane et orientée perpendiculairement à la direction du vecteur *y̅.* La languette 74 est décalée de la portion 68 par rapport à la direction du vecteur *y̅* de sorte à se trouver à l'intérieur de l'enveloppe 22. La languette 74 comporte un doigt excentré 76 s'étendant selon la direction du vecteur *y̅.* Le doigt 76 est décalé par rapport à la direction axiale de rotation de la tige 66.

Le mécanisme 73 comporte en outre une biellette de transmission 90. La biellette 90 comporte un perçage (non représenté) recevant le doigt 76. Le doigt 76 et le perçage établissent une liaison pivot d'axe dirigé par le vecteur *y̅* entre la biellette 90 et 1a languette 74. Bien que, dans l'exemple illustré, le doigt 76 soit reçu dans un perçage, on peut bien entendu prévoir un logement différent pour le doigt 76, par exemple une rainure s'étendant selon la direction longitudinale de la biellette 90. Dans ce cas, le doigt 76 peut se déplacer par rapport à la biellette en translation selon la direction longitudinale entre les deux extrémités de la rainure.

La biellette 90 est montée rotative autour d'un axe 94 solidaire de la pièce 78. Plus particulièrement, l'axe 94 est solidaire des deux plaques 82 et s'étend selon la direction du vecteur *y̅* entre les deux plaques 82. Pour fournir la liaison pivot autour de l'axe *y̅* entre la biellette 90 et l'axe 94, la biellette 90 peut comprendre un alésage cylindrique de diamètre légèrement supérieur au diamètre de l'axe 94.

Ainsi, au moyen du mécanisme 73, lorsque l'utilisateur actionne la rotation du levier 64 autour de la direction du vecteur *y̅* de sorte à écarter la portion 68 de la face 13, le doigt 76 est entraîné en rotation autour de l'axe 66 de sorte à se déplacer sensiblement selon la direction et dans le sens du vecteur *z̅* (sens antihoraire par rapport aux figures 3 et 4). Ce faisant, il entraîne la biellette 90 vers le haut et en direction de la face 13. La pièce 78 est alors entraînée en rotation de telle sorte que la portion formant clapet 86 est écartée de la surface 12 (sens horaire par rapport aux figures 3 et 4). L'orifice 20 est alors ouvert. Par ailleurs, lorsque la pièce 78 est pivotée, l'élément 100 est axialement décalé par rapport à l'excroissance 98 selon la direction du vecteur *x̅.* En résultat, l'évidement 108 ne coopère plus par complémentarité de forme avec l'excroissance radiale 98. De la sorte, l'arbre 52 n'est plus bloqué en rotation.

En sens inverse, lorsque l'utilisateur relâche le levier 64, le moyen de rappel élastique 88 entraîne la pièce 78 en rotation en sens inverse (sens antihoraire par rapport aux figures 3 et 4) jusqu'à ce que la pièce 78 se trouve dans sa position plaquée contre la face 13 et la surface 12. En résultat, l'orifice 20 est obstrué par la portion 86. Lors du pivotement de la pièce 78, l'élément 100 revient se placer autour de l'excroissance 98, de sorte que la rotation de l'arbre 52 est empêchée par complémentarité de formes avec l'évidement 108. Dans le même temps, l'axe 94 pivote autour de l'axe 84 de sorte à se déplacer sensiblement selon la direction du vecteur *z̅* et en sens inverse au sens du vecteur *z̅* (sens antihoraire par rapport aux figures 3 et 4). Ce faisant, il entraîne la biellette 90 vers le bas et à l'opposé de la face 13. Le doigt 76 est entraîné en rotation autour de l'axe 66 de sorte à se déplacer vers le bas (sens horaire par rapport à la figure 3). Le levier 64 est alors entraîné en rotation dans le même sens, de telle sorte que la partie 68 est rapprochée la face 13.

Comme cela a déjà été expliqué, le dispositif 2, notamment grâce à la buse de versage 28, au plateau de support 40 et au moyen de recyclage 56, permet d'éviter au maximum la formation de poussières de produit alimentaire. Cela constitue un avantage tout particulier pour un dispositif de distribution destiné à être installé dans un commerce alimentaire. En effet, en disposant un premier dispositif de distribution de produit alimentaire, par exemple un distributeur de farine de blé, à côté d'un second distributeur de produit alimentaire, par exemple un distributeur de farine sans gluten, on évite que le consommateur souhaitant prélever une farine particulière, en l'espèce la farine sans gluten, récupère des traces d'une autre farine non souhaitée. Bien entendu, ces avantages ne sont pas limités à ces deux exemples de produit alimentaire.

Comme expliqué précédemment, le dispositif 2 comporte deux moyens de blocage de la distribution de produit alimentaire. En plus des effets propres de chaque moyen de blocage pris indépendamment par rapport à l'autre, le fait d'utiliser les deux moyens de blocage décrits permet d'obtenir l'effet supplémentaire suivant. En utilisant à la fois un moyen d'obstruction de l'orifice 20 et un moyen de verrouillage de la rotation de l'arbre 52, on limite au maximum la perte de produit alimentaire et la génération de poussière tout en évitant que du produit alimentaire puisse être pressé contre la portion formant clapet 86. Il en résulte une mise sous pression moins importante du produit alimentaire, une moindre usure de la pièce 78 et de la vis sans fin 50, et la possibilité de choisir un ressort 88 présentant une moindre raideur.

Dans l'exemple illustré, une seule pièce de support et un seul mécanisme de transmission sont utilisés pour les deux moyens de blocage. Toutefois, on aurait pu, sans sortir du cadre de l'invention, envisager deux pièces de support supportant respectivement les deux moyens de blocage, et deux mécanismes de transmission transmettant le mouvement du levier 64 aux deux pièces de support respectives. Bien qu'une telle variante soit possible, elle est toutefois moins avantageuse car elle génère un encombrement plus important et elle nécessite davantage de pièces, de sorte à rendre la fabrication du dispositif plus coûteuse.

En référence à la figure 4, le dispositif 2 comporte encore un moyen de détection 110. Le moyen 110 a pour fonction de détecter si un récipient approprié a été disposé entre la buse 28 et le plateau 40. Pour ce faire, le moyen 110 détecte si l'extrémité supérieure de la languette 42 est dans la position correspondant à la position de rappel mise en oeuvre par le ressort de traction 46. Le moyen 110 peut comprendre tout type de capteur de fin de course.

Dans l'exemple illustré, le moyen de détection 110 comporte un pion rotatif 112. Le pion rotatif comporte une surface de glissement 114 située à une partie inférieure du pion 112. La surface 114 est capable de coopérer par friction avec l'extrémité supérieure de la languette 42. Plus précisément, si la languette 42 est déplacée vers le haut par rapport à la position illustrée sur la figure 4, le pion 112 est pivoté de sorte à se trouver dans le prolongement de la fente 72. Lorsque le pion est ainsi pivoté, il empêche au moins partiellement la rotation du levier 64. Dans ce cas, il est impossible pour l'utilisateur de commander les moyens de blocage afin de distribuer du produit alimentaire.

Un tel moyen de détection permet en particulier d'empêcher la distribution lorsque celle-ci est demandée par un utilisateur mais qu'aucun récipient n'est disposé de manière à recueillir le produit alimentaire. On évite ainsi la perte de produit alimentaire ou la génération de poussière de produit alimentaire dans l'environnement du dispositif 2 lorsque la distribution n'est pas souhaitée, par exemple lorsqu'un enfant manipule le dispositif pour jouer ou que l'utilisateur a omis de disposer un récipient de versage. L'utilisation d'un tel moyen de détection est donc particulièrement utile pour un dispositif de distribution destiné à être mis à disposition dans un magasin tel qu'un magasin alimentaire.

Au vu de ce qui précède, le dispositif 2 fournit un moyen simple pour permettre la distribution de produits alimentaires en vrac, y compris de produits alimentaires pulvérulents. En particulier, l'effort nécessaire pour prélever une quantité de produit alimentaire est réduit du fait de l'utilisation d'une vis sans fin qui démultiplie l'effort fourni par l'utilisateur. Le dispositif 2 est donc tout particulièrement adapté pour des produits alimentaires tels que de la farine ou de l'épeautre qui peuvent durcir avec le temps.

## Revendications

1. Dispositif de distribution (2) de produit alimentaire pulvérulent, comprenant un réservoir (4), un passage de versage (24) du produit alimentaire connecté au réservoir (4), et un moyen de transport (48) du produit alimentaire, ledit moyen de transport (48) étant situé à l'intérieur du réservoir (4), **caractérisé en ce que** le moyen de transport (48) comporte une vis sans fin (50), le dispositif (2) comprenant en outre un moyen de recyclage (56) d'un mélange d'air et de produit alimentaire pulvérulent en suspension dans le passage de versage (24), le réservoir (4) étant délimité par une enceinte fermée, le moyen de recyclage (56) comprenant un tube (58) reliant le passage de versage (24) à l'enceinte fermée, et une enveloppe (22) solidaire du réservoir (4) délimitant le passage de versage (24).

2. Dispositif (2) selon la revendication 1, comprenant un moyen de blocage de la distribution du produit alimentaire pulvérulent et un moyen de commande apte à commander l'activation du moyen de blocage.

3. Dispositif (2) selon la revendication 2, comprenant en outre un plateau de support (40) apte à supporter un récipient de versage de produit alimentaire pulvérulent et un moyen de détection (110) capable de détecter la présence d'un récipient de versage de produit alimentaire sur le plateau de support (40), le moyen de commande étant configuré pour commander la désactivation du moyen de blocage seulement lorsque le moyen de détection (110) détecte la présence d'un récipient de versage sur le plateau de support (40).

4. Dispositif (2) selon la revendication 3, dans lequel le moyen de commande comprend un levier de commande (64) rotatif par rapport au réservoir (4), le plateau de support (40) étant apte à se déplacer en translation par rapport au réservoir (4), selon une direction perpendiculaire à la direction de rotation du levier de commande (64), le moyen de blocage comprenant un pion rotatif (112) autour de la direction de rotation du levier de commande (64), le pion rotatif (112) étant apte à être disposé dans une position de blocage de la rotation du levier de commande (64).

5. Dispositif (2) selon l'une quelconque des revendications 2 à 4, dans lequel le réservoir (4) comprend un orifice de passage (20) situé sur le trajet du produit alimentaire entre le réservoir (4) et le passage de versage (24), le moyen de blocage comprenant en outre un moyen d'obstruction de l'orifice de passage (20).

6. Dispositif (2) selon la revendication 5, dans lequel le moyen de commande comprend un levier de commande (64) rotatif par rapport au réservoir (4), le moyen d'obstruction comprenant une pièce de support (78) montée rotative par rapport au réservoir (4) et un mécanisme de transmission de mouvement (73) capable de transmettre un mouvement du levier de commande (64) à la pièce de support (78), la pièce de support (78) comprenant une portion formant clapet (86) apte à obstruer l'orifice de passage (20).

7. Dispositif (2) selon l'une quelconque des revendications 1 à 6, dans lequel la vis sans fin (50) comprend un arbre pivotant (52) par rapport au réservoir (4), le dispositif (2) comprenant un moyen de verrouillage apte à verrouiller le pivotement dudit arbre par rapport au réservoir.

8. Dispositif selon la revendication 7, dans lequel l'arbre pivotant (52) comprend une excroissance radiale (98), le moyen de commande comprend un levier de commande (64) rotatif par rapport au réservoir (4), le moyen de verrouillage comprenant une pièce de verrouillage (100) montée rotative par rapport au réservoir et un mécanisme de transmission de mouvement (73) apte à transmettre un mouvement du levier de commande (64) à la pièce de verrouillage (100), la pièce de verrouillage (100) comprenant un évidement (108) de forme complémentaire à la forme de l'excroissance radiale (98), l'évidement (108) étant apte à entourer l'excroissance radiale (98).

## Patentansprüche

1. Ausgabevorrichtung eines pulverförmigen Lebensmittelprodukts (2), einen Behälter (4) umfassend, einen Gießdurchgang (24) für das Lebensmittelprodukt, der mit dem Behälter (4) verbunden ist, und ein Transportmittel (48) des Lebensmittelprodukts, wobei das Transportmittel (48) innerhalb des Behälters (4) angeordnet ist, **dadurch gekennzeichnet, dass** das Transportmittel (48) eine Schnecke (50) beinhaltet, wobei die Vorrichtung (2) ferner ein Mittel zum Recycling (56) eines Gemisches aus Luft und dem pulverförmigem Lebensmittelprodukt in Suspension im Gießdurchgang (24) umfasst, wobei der Behälter (4) durch ein geschlossenes Gehäuse eingegrenzt ist, wobei das Recyclingmittel (56) ein Rohr (58) umfasst, das den Gießdurchgang (24) an das geschlossene Gehäuse anschließt, und einen mit dem Behälter (4) fest verbundenen Mantel (22), der den Gießdurchgang (24) eingrenzt.

2. Vorrichtung (2) nach Anspruch 1, ein Mittel zum Blockieren der Ausgabe des pulverförmigen Lebensmittelprodukts umfassend und ein Steuermittel, das geeignet ist, die Aktivierung des Blockierungsmittels zu steuern.

3. Vorrichtung (2) nach Anspruch 2, ferner eine Abstützplatte (40) umfassend, die geeignet ist, ein Gießgefäß des pulverförmigen Lebensmittelprodukts zu tragen, und ein Erkennungsmittel (110), das fähig ist, das Vorhandensein eines Gießgefäßes des Lebensmittelprodukts auf der Abstützplatte (40) zu erkennen, wobei das Steuermittel konfiguriert ist, um die Deaktivierung des Blockierungsmittels nur dann zu steuern, wenn das Erkennungsmittel (110) das Vorhandensein eines Gießgefäßes auf der Abstützplatte (40) erkennt.

4. Vorrichtung (2) nach Anspruch 3, wobei das Steuermittel einen Steuerhebel (64) umfasst, der relativ zum Behälter (4) drehbar ist, wobei die Abstützplatte (40) geeignet ist, sich translatorisch relativ zum Behälter (4) zu verschieben, in einer Richtung perpendikular zur Drehrichtung des Steuerhebels (64), wobei das Blockierungsmittel einen Stift (112) umfasst, der um die Drehrichtung des Steuerhebels (64) drehbar ist, wobei der Drehstift (112) geeignet ist, in einer Blockierungsposition der Drehung des Steuerhebels (64) positioniert zu werden.

5. Vorrichtung (2) nach einem der Ansprüche 2 bis 4, wobei der Behälter (4) eine Durchgangsöffnung (20) umfasst, die auf dem Weg des Lebensmittelprodukts zwischen dem Behälter (4) und dem Gießdurchgang (24) angeordnet ist, wobei das Blockierungsmittel ferner ein Mittel zur Obstruktion der Durchgangsöffnung (20) umfasst.

6. Vorrichtung (2) nach Anspruch 5, wobei das Steuermittel einen Steuerhebel (64) umfasst, der relativ zum Behälter (4) drehbar ist, wobei das Obstruktionsmittel ein Stützteil (78) umfasst, das relativ zum Behälter (4) drehbar montiert ist, und einen Bewegungsübertragungsmechanismus (73), der fähig ist, eine Bewegung des Steuerhebels (64) auf das Stützteil (78) zu übertragen, wobei das Stützteil (78) einen Abschnitt (86) umfasst, der eine Klappe bildet, die geeignet ist, die Durchgangsöffnung (20) zu obstruieren.

7. Vorrichtung (2) nach einem der Ansprüche 1 bis 6, wobei die Schnecke (50) eine Welle (52) umfasst, die relativ zum Behälter (4) schwenkbar ist, wobei die Vorrichtung (2) ein Verriegelungsmittel umfasst, das geeignet ist, die Schwenkung der Welle relativ zum Behälter zu verriegeln.

8. Vorrichtung nach Anspruch 7, wobei die schwenkbare Welle (52) einen radialen Vorsprung (98) umfasst, wobei das Steuermittel einen Steuerhebel (64) umfasst, der relativ zum Behälter (4) drehbar ist, wobei das Verriegelungsmittel ein Verriegelungsteil (100) umfasst, das relativ zum Behälter drehbar montiert ist, und einen Bewegungsübertragungsmechanismus (73), der geeignet ist, eine Bewegung des Steuerhebels (64) auf das Verriegelungsteil (100) zu übertragen, wobei das Verriegelungsteil (100) eine Aussparung (108) mit einer Form umfasst, die komplementär ist zur Form des radialen Vorsprung (98), wobei die Aussparung (108) geeignet ist, um den radialen Vorsprung (98) zu umgeben.

## Claims

1. A device (2) for dispensing powdered food product, comprising a tank (4), a passage (24) for pouring the food product connected to the tank (4), and a means (48) for transporting the food product, said transport means (48) being located inside the tank (4), **characterised in that** the transport means (48) includes a worm screw (50), the device (2) further comprising a means (56) for recycling a mixture of air and powdered food product suspended in the pouring passage (24), the tank (4) being delimited by a closed enclosure, the recycling means (56) comprising a tube (58) connecting the pouring passage (24) to the closed enclosure, and a shell (22) integral with the tank (4) delimiting the pouring passage (24).

2. The device (2) according to claim 1, comprising a means for blocking dispense of powdered food product and a control means capable of controlling activation of the blocking means.

3. The device (2) according to claim 2, further comprising a support plate (40) capable of supporting a container for pouring powdered food product and a detection means (110) capable of detecting presence of a food product pouring container on the support plate (40), the control means being configured to control deactivation of the blocking means only when the detection means (110) detects presence of a pouring container on the support plate (40).

4. The device (2) according to claim 3, wherein the control means comprises a control lever (64) rotatable relative to the tank (4), the support plate (40) being capable of translationally moving relative to the tank (4), along a direction perpendicular to the direction of rotation of the control lever (64), the blocking means comprising a pin (112) rotatable about the direction of rotation of the control lever (64), the rotatable pin (112) being capable of being disposed in a position for blocking rotation of the control lever (64).

5. The device (2) according to any of claims 2 to 4, wherein the tank (4) comprises a passage port (20) located on the path of the food product between the tank (4) and the pouring passage (24), the blocking means further comprising a means for obstructing the passage port (20).

6. The device (2) according to claim 5, wherein the control means comprises a control lever (64) rotatable relative to the tank (4), the obstruction means comprising a support piece (78) rotatably mounted relative to the tank (4) and a motion transmission mechanism (73) capable of transmitting motion of the control lever (64) to the support piece (78), the support piece (78) comprising a valve-forming portion (86) capable of obstructing the passage port (20).

7. The device (2) according to any of claims 1 to 6, wherein the worm screw (50) comprises a shaft (52) pivotable relative to the tank (4), the device (2) comprising a locking means capable of locking pivoting of said shaft relative to the tank.

8. The device according to claim 7, wherein the pivotable shaft (52) comprises a radial protrusion (98), the control means comprises a control lever (64) rotatable relative to the tank (4), the locking means comprising a locking piece (100) rotatably mounted relative to the tank and a motion transmission mechanism (73) capable of transmitting motion of the control lever (64) to the locking piece (100), the locking piece (100) comprising a recess (108) having a shape complementary to the shape of the radial protrusion (98), the recess (108) being capable of surrounding the radial protrusion (98).
